# EUROPEAN PATENT SPECIFICATION

(11) **EP 1 288 535 B1**
(45) Date of publication and mention of the grant of the patent: **22.03.2006**
(21) Application number: 02078545.7
(22) Date of filing: 28.08.2002
(51) Int. Cl.: F16H 61/28, F16H 61/16, F16H 59/72

(54) **Automated vehicle transmission and method for controlling**
Atomatisiertes Fahrzeuggetriebe und sein Steuerverfahren
Transmission véhiculaire automatisée et méthode de commande

(30) Priority: 28.08.2001 JP 2001257451
(43) Date of publication of application: 05.03.2003
(73) Proprietor: AISIN SEIKI KABUSHIKI KAISHA, Kariya-shi, Aichi-ken (JP); AISIN AI Co., Ltd., Nishio-shi, Aichi-ken (JP)
(72) Inventor: Terakawa, Tomomitsu, Anjo-shi, Aichi-ken (JP); Shimizu, Masaru, Toyota-shi, Aichi-ken (JP); Taguchi, Yoshinori, Anjo-shi, Aichi-ken (JP); Haneda, Yoshitomi, Anjo-shi, Aichi-ken (JP); Miyazaki, Takeshige, Anjo-shi, Aichi-ken (JP); Aoyama, Yoshiyuki, Nishio-shi, Aichi-ken (JP)
(74) Representative: Marshall, John Grahame

(56) References cited:
- EP-A- 0 479 464
- EP-A- 0 562 803
- DE-A- 19 932 755
- US-A- 5 676 619
- US-A- 5 873 426
- US-B1- 6 277 049
- PATENT ABSTRACTS OF JAPAN vol. 010, no. 227 (M-505), 7 August 1986 (1986-08-07) & JP 61 062648 A (TOYOTA MOTOR CORP), 31 March 1986 (1986-03-31)
- PATENT ABSTRACTS OF JAPAN vol. 1997, no. 05, 30 May 1997 (1997-05-30) & JP 09 021461 A (MITSUBISHI MOTORS CORP), 21 January 1997 (1997-01-21)

## Description

### FIELD OF THE INVENTION

This invention generally relates to an automated vehicle transmission. More particularly, this invention pertains to an automated vehicle transmission which is provided with an automatic clutch assembly and an automated manual transmission connected to an internal combustion engine via the automatic clutch assembly. The automated vehicle transmission controls the automatic clutch assembly and the automated manual transmission by driving an actuator corresponding to a vehicle driving condition. Such an automated vehicle transmission is known from EP-A-0 479 464, which discloses all the features of the preambles of independent claims 1 and 6.

### BACKGROUND OF THE INVENTION

Conventionally, automated vehicle transmissions have been in practical use for vehicles in which manual transmissions (an M/T) are mounted. The automated vehicle transmission automatically controls an engaging/releasing operation of a clutch and a shift operation by the manual transmission. Comparing with an automatic transmission (an A/T) for performing a torque transmission by use of a torque converter, the aforementioned automated vehicle transmission for a vehicle with an M/T can be manufactured at a lower cost.

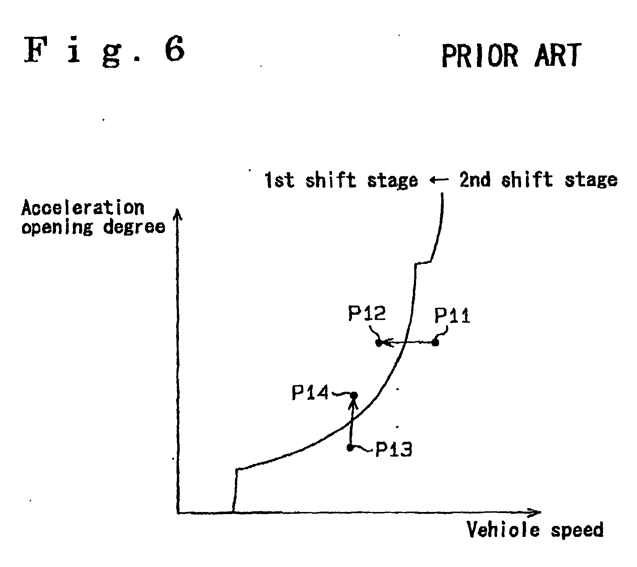

There are two shift modes supplied by the automated vehicle transmission: one is a manual shift mode and the other one is an automatic shift mode. When the automatic shift mode is selected, the actuator is driven corresponding to an operating amount of an accelerator pedal and a vehicle speed so as to perform a switching operation of a shift stage of the manual transmission. Referring to FIG. 6 as an example, taking a condition in which a second shift stage has been selected by the manual transmission, a down-shift operation from the second shift stage to a first shift stage is performed when a shift point P11 is shifted to a shift point P12 in response to a vehicle speed deceleration or when a shift point P13 is shifted to a shift point P14 in response to a depressing operation of the accelerator pedal. That is, the down-shift operation from the second shift stage to the first shift stage is performed when the shift point exceeds a shift line illustrated in FIG.6 in response to the vehicle speed deceleration or the depressing operation of the acceleration pedal.

More specifically, the automated vehicle transmission for the vehicle is provided with the manual transmission which includes a synchromesh mechanism and an actuator for a shift operation capable of moving a sleeve of the synchromesh mechanism. The shift stage in the manual transmission is switched when the sleeve is moved in an axial direction of an output shaft of the manual transmission in response to a driving operation of the actuator for the shift operation. A direct current motor is employed as a driving power source for driving the actuator for the shift operation.

However, the aforementioned automated vehicle transmission has some problems to be improved, which are described hereinbelow. A gear ratio of the first shift stage is generally greater than the gear ratio of another shift stage. Therefore, a large torque is required so as to move the sleeve of the synchromesh mechanism when the down-shift operation to the first shift stage is performed. Further, the transmission gears are immersed in transmission oil in a housing of the manual transmission. The flow resistance of the transmission oil is increased when the transmission reaches a low temperature. In this case, an increase of the torque is required for performing the down-shift operation to the first shift stage. To achieve the objective, there may be a need for the automated vehicle transmission for employing the manual transmission having a large-sized actuator capable of generating a large torque. That may result in an increase of a manufacturing cost of the automated vehicle transmission.

The present invention therefore seeks to provide an improved automated vehicle transmission capable of reducing the manufacturing cost of the automated vehicle transmission.

### SUMMARY OF THE INVENTION

An automated vehicle transmission according to the invention is provided with an automatic clutch assembly having a clutch and an actuator for the clutch for controlling a releasing/engaging operation of the clutch, an automated manual transmission for connection to an internal combustion engine via the automatic clutch assembly and having a synchromesh mechanism and an actuator for a shift operation for moving a sleeve of the synchromesh mechanism, and a control means for controlling the automatic clutch assembly and the automated manual transmission by driving the actuator for the clutch and the actuator for the shift operation. The automated vehicle transmission is **characterized in that** the control means prohibits a down-shift operation to the first forward speed ratio performed by driving the actuator for the shift operation when a transmission oil temperature nf the automated manual transmission is at a predetermined temperature or at a lower temperature than that.

Further, plural shift lines corresponding to the transmission oil temperature are preferably predetermined for performing the down-shift operation to the first forward speed ratio. The control means selects one of the plural shift lines corresponding to the transmission oil temperature and performs the down-shift operation to the first forward speed ratio based upon the selected shift line.

### BRIEF DESCRIPTION OF THE DRAWING FIGURES

The foregoing and additional features and characteristics of the present invention will become more apparent from the following detailed description considered with reference to the accompanying drawing figures wherein:
FIG. 1 is a schematic block view illustrating a vehicle control system according to an embodiment of the present invention;
FIG. 2 is a schematic view illustrating an automated manual transmission shown in FIG. 1;
FIG. 3 is a drawing for explaining a shit pattern of a shift lever operating the automated manual transmission shown in FIGs. 1 and 2;
FIG. 4 is flow chart for explaining a program performed by an electronic control unit shown in FIG. 1; and
FIG. 5 is a graph for explaining a shift line representing an up-shift operating from a first shift stage to a second shift stage and two shift lines each representing a down-shift operation from the second shift stage to the first shift stage according to the embodiment of the present invention; and
FIG. 6 is a graph for explaining a shift line representing a down-shift operating from a second shift stage to a first shift stage according to a conventional art.

### DETAILED DESCRIPTION OF THE INVENTION

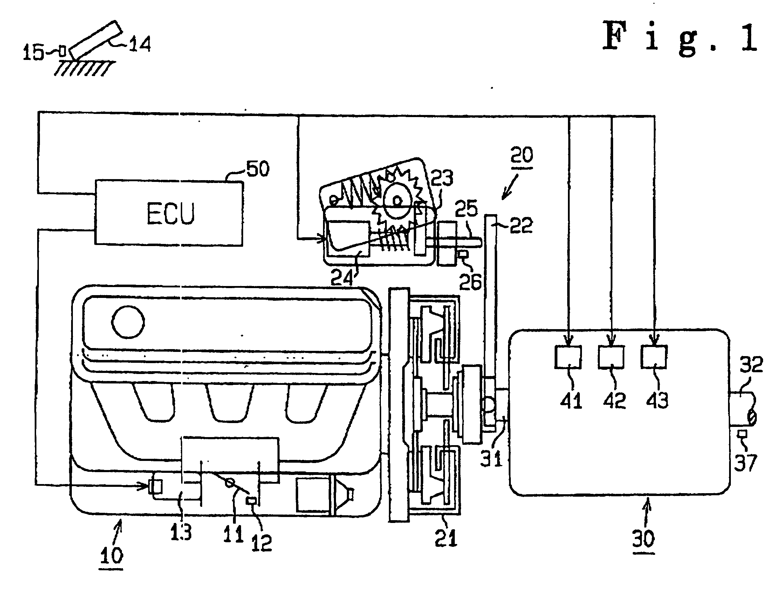

Referring to FIG. 1, a vehicle control system according to an embodiment of the present invention includes an internal combustion engine 10 (i.e. hereinafter, referred to as an engine), an automatic clutch assembly 20 assembled to an output shaft (i.e. a crankshaft) of the engine 10, and an automated manual transmission 30 connected to the engine 10 via the automatic clutch assembly 20.

The engine 10 is provided with a throttle valve 11 for adjusting an input air amount, a throttle sensor 12 for detecting an opening degree of the throttle valve 11 (i.e. a throttle opening degree), and an actuator 13 for the throttle valve 11 for controlling an opening/closing operation of the throttle valve 11. An accelerator pedal 14 (i.e. an acceleration operating member) depressed by a vehicle driver is equipped with an acceleration opening degree sensor 15 for detecting an operating amount of the accelerator pedal 14 (i.e. an acceleration opening degree). The actuator 13 for the throttle valve 11 is activated based upon the acceleration opening degree detected by the acceleration opening degree sensor 15. Therefore, the engine 10 can generate the engine output corresponding to the driver's operating amount of the accelerator pedal 14.

The automatic clutch assembly 20 is provided with a friction clutch 21 (a mechanical dry type-single disc clutch), a clutch lever 22, and an actuator 23 for the friction clutch 21. The actuator 23 controls an engaging/releasing operation of the friction clutch 21. The actuator 23 is provided with a direct current motor 24 as a driving power source of the actuator 23. A rod 25 is moved in a forward or rearward direction in response to the driving operation of the motor 24. The clutch lever 22 is moved associated with the movement of the rod 25 so as to establish or interrupt a power-transmitting path of the friction clutch 21.

More specifically, when the clutch lever 22 is moved in a direction towards the right-hand side of FIG. 1 in response to the forward movement of the rod 25 in the right-hand side of FIG. 1, the friction clutch 21 is operated to be released. On the other hand, when the clutch lever 22 is returned in a direction towards the left-hand side of FIG. 1 in response to the rearward movement of the rod 25, the friction clutch 21 is operated to be engaged. The automatic clutch assembly 20 is equipped with a clutch engagement sensor 26 for detecting a moving amount (i.e. a stroke) of the rod 25 of the actuator 23. The engagement condition of the friction clutch 21 is judged based upon the stroke of the rod 25 detected by the clutch engagement sensor 26. For instance, when the friction clutch 21 is required to be engaged as the vehicle starts, the stroke of the rod 25 operated by the actuator 23 is controlled. Therefore, the torque transmission of the friction clutch 21 is adjusted so as to obtain an accurate vehicle acceleration.

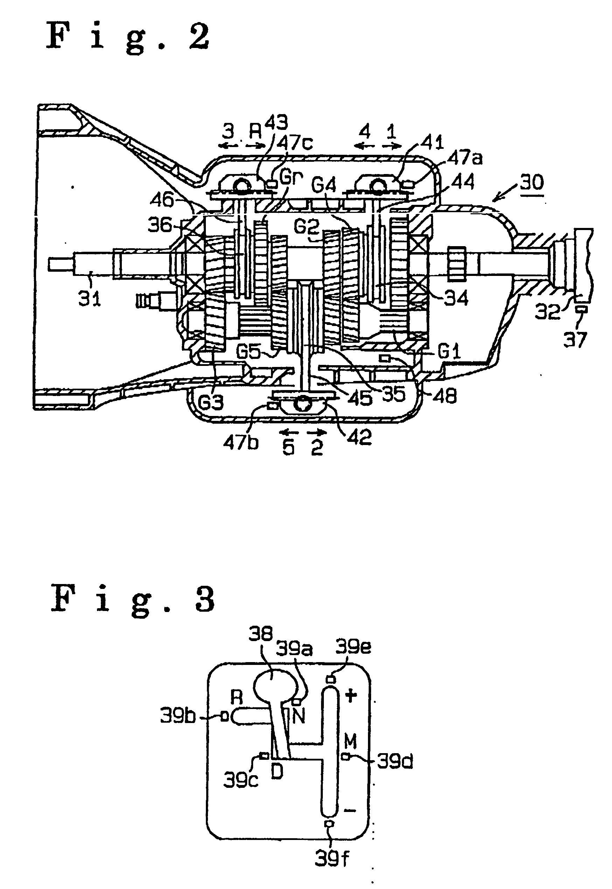

Referring to FIG. 2, the automated manual transmission 30 is a biaxial type gear transmission which is applicable for five forward shift stages and a single rearward shift stage. The transmission 30 is provided with an input shaft 31, an output shaft 32, three pairs of gear sets (G1 and G4, G2 and G5, G3 and Gr), and three sleeves 34, 35, 36. The gear ratio of a first shift stage of the automated manual transmission 30 is set at 3.545, the gear ratio of a second shift stage is set at 1.913, the gear ratio of a third shift stage is set at 1.310, the gear ratio of a fourth shift stage is set at 1.027, the gear ratio of a fifth shift stage is 0.850, and the gear ratio of a reverse shift stage is set at 3.214.

The input shaft 31 of the transmission 30 is connected to an output portion of the friction clutch 21 and the output shaft 32 thereof is connected to an axle shaft (not shown) so as to establish a power-transmitting path. The transmission 30 is equipped with a rotational sensor 37 for detecting a rotational number (rotational speed) of the output shaft 32. A vehicle speed can be obtained based upon the rotational number of the output shaft 32.

One of the pairs of gear sets, which is illustrated at the right-hand side of FIG. 2, is the gear set G1 for the first shift stage and the gear set G4 for the fourth shift stage. The gear sets G1 and G4 face each other and the sleeve 34 is disposed therebetween. A second pair of gear sets, which is illustrated at the middle of FIG. 2, is the gear set G2 for the second shift stage and the gear set G5 for the fifth shift stage. The gear sets G2 and G5 face each other and the sleeve 35 is disposed therebetween. A third pair of gear sets, which is illustrated at the left-hand side of FIG. 2, is the gear set G3 for the third shift stage and the gear set Gr for the reverse shift stage. The gear sets G3 and Gr face each other and the sleeve 36 is disposed therebetween. Each sleeve 34, 35, 36 forms a synchromesh mechanism with a synchronizer ring and a clutch hub. That is, the automated manual transmission 30 is a synchromesh-type transmission. When the sleeves 34, 35, 36 are moved towards the axial direction of the output shaft 32, a specific shift stage is selected corresponding to an engagement of the gears so as to establish a power-transmitting path.

For example, when the sleeve 34 is moved to the side of the gear set G1 for the first shift stage, a power-transmitting path can be established via the gear set G1. When the sleeve 34 is moved to the side of the gear set G4 for the fourth shift stage, a power-transmitting path can be established via the gear set G4 for the fourth shift stage. When each sleeve 35, 36 is moved to the side of one of the pair gear sets, a power-transmitting path can be established via the gear set to which the sleeve was moved. When each sleeve 24, 25, and 26 is moved to a neutral position between each pair of gear sets, a power-transmitting path in the transmission 30 can not be established via any gear set.

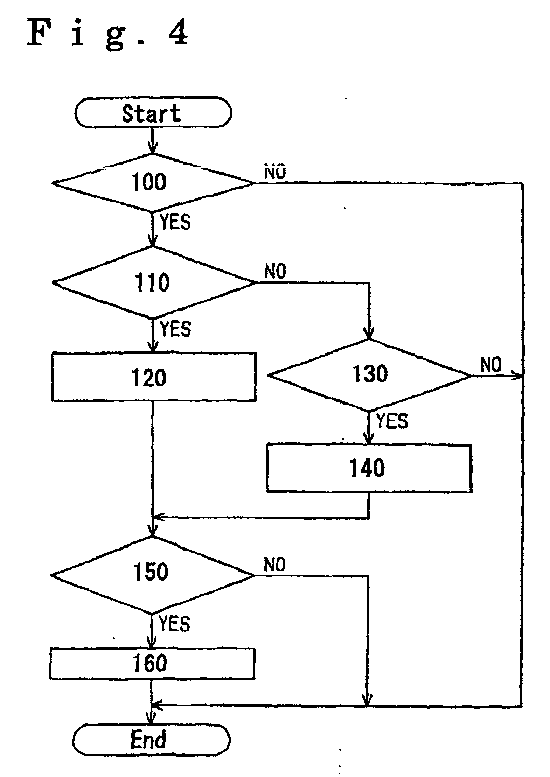

The shift operating mechanism of the automated manual transmission 30 is provided with a shift lever 38 which is operated along a shift pattern shown in FIG. 3. Position sensors 39a, 39b, 39c, 39d, 39e, and 39f are accommodated at the shift positions of the shift lever 38 for detecting the shift positions of the shift lever 38. The position sensor 39a detects the shift operation of the shift lever 38 to an N position, i.e. a neutral position in which the driving power can not be transmitted via any gear set. The position sensor 39b detects the shift operation of the shift lever 38 to an R position, i.e. a reverse position for establishing the power-transmitting path via the gear set Gr. The position sensor 39c detects the shift operation of the shift lever 38 to a D position, i.e. a drive position for establishing the power-transmitting path via any one of the gear sets G1, G2, G3, G4, and G5 under an automatic shift mode. The position sensor 39d detects the shift operation of the shift lever 38 to an M position, i.e. a manual position for establishing the power-transmitting path via any one of the gear sets G1, G2, G3, G4 and G5 under a manual shift mode. The position sensor 39e detects the shift operation of the shift lever 38 to a positive (+) position, i.e. an upper shift position for establishing the power-transmitting path via a shift-up gear set. The position sensor 39f detects the shift operation of the shift lever 38 to a negative (-) position, i.e. a lower shift position for establishing the power-transmitting path via a shift-down gear set. As aforementioned, a shift stage of the automated manual transmission 30 can be switched based upon the shift position detected by the above position sensors.

As illustrated in FIG. 2, the automated manual transmission 30 is still further provided with actuators 41, 42, 43 for the shift operation. The actuator 41 for the shift operation moves the sleeve 34 via a shift fork 44. The actuator 42 for the shift operation moves the sleeve 35 via a shift fork 45. The actuator 43 for the shift operation moves the sleeve 36 via a shift fork 46. Each actuator 41, 42, 43 is equipped with a motor having a speed reduction gear, a pinion assembled to a rotational shaft of the motor, a rack engaged with the pinion and integrally moved with each shift fork 44, 45, 46. When the motors are rotatably driven, the shift forks 44, 45 ,46 are moved in the axial direction of the output shaft 32 via the pinions and the racks, respectively. Therefore, the sleeves 34, 35, 36 are pushed and moved. The automated manual transmission 30 is further equipped with position sensors 47a, 47b, 47c for detecting the positions of the sleeves 34, 35, and 36. The condition of the power transmission via each gear set is judged based upon the position detected by each sensor 47a, 47b, and 47c.

Further, transmission oil is accumulated in a housing for housing the transmission (gear sets G1, G2, G3, G4, G5, and Gr) of the automated manual transmission 30 so as to avoid a gear waste. As illustrated in FIG. 2, an oil temperature sensor (i.e. an oil temperature detecting means) 48 is provided in the automated manual transmission 30 for detecting the temperature of the transmission oil.

The vehicle control system further includes a control means comprising an electronic control unit (hereinafter, referred to as an ECU) 50. The automated vehicle transmission of the present invention includes the ECU 50, the automatic clutch assembly 20, and the automated manual transmission 30. The ECU 50 is provided with a well-known microcomputer (CPU, not shown) as a main unit. The ECU 50 is connected to various sensors including the throttle sensor 12,-the acceleration opening degree sensor 15, the actuator 13 for the throttle valve 11, the actuator 23, and the actuators 41, 42, 43 for the shift operation. The ECU 50 reads signals detected by the various sensors so as to detect the vehicle driving conditions such as the throttle opening degree, the acceleration opening degree, the vehicle speed, the shift position, and the transmission oil temperature. The ECU 50 further operates the actuators 13, 23, 41, 42, and 43 based upon the vehicle driving conditions.

More specifically, the ECU 50 reads the amount of movement of the accelerator pedal 14 (i.e. the acceleration opening degree) based upon a value detected by the acceleration opening degree sensor 15. The ECU 50 activates the actuator 13 for the throttle valve 11 based upon the acceleration opening degree. Therefore, the amount of air to be inputted to the engine 10 is adjusted so as to generate an engine output corresponding to the driver's operation of the accelerator pedal 14.

When the shift operation is performed by the automated manual transmission 30, the ECU 50 releases the friction clutch 21 by driving the actuator 23 and closes the throttle valve 11 by driving the actuator 13 for the throttle valve 11. The gear set is switched for establishing the power-transmitting path in the automated manual transmission 30 by driving the actuators 41, 42, 43 for the shift operation. For instance, when the down-shift operation from the second shift stage to the first shift stage is performed, the ECU 50 moves the sleeve 35 to the neutral position by driving the actuator 42 for the shift operation so as to interrupt the power transmission via any one of the gear sets. The ECU 50 then moves the sleeve 34 towards the side of the gear set G 1 for the first shift stage by driving the actuator 41 for the shift operation so as to establish the power-transmitting path via the gear set G1. The ECU 50 operates the friction clutch 21 to be engaged by driving the actuator 23 and returns the throttle valve 11 to be opened corresponding to the acceleration opening degree by driving the actuator 13 for the throttle valve 11. As described above, the shift operation by the automated manual transmission 30 is automatically performed so as to transmit the engine output to a drive line such as a drive wheel via the automated manual transmission 30.

As described above, the automated manual transmission 30 is provided with the synchromesh mechanism having sleeves 34, 35, and 36. When the sleeves 34, 35, and 36 are moved by the actuators 41, 42, 43 for the shift operation for completing the shift operation, a predetermined motor torque is required. The predetermined motor torque is increased corresponding to the increase of the gear ratio. According to the automated manual transmission 30 in the present invention, the gear ratio for the first shift stage is set at the largest gear ratio, 3.545. Therefore, the actuator 41 for performing the down-shift operation to the first shift stage is required to have the largest motor torque. Especially when the transmission 30 is operating at a low temperature, a flow resistance of the transmission oil is increased. That is, when the down-shift operation to the first shift stage is performed in the condition that the transmission 30 is operating at the low temperature, a large load may be applied to the actuator 41 for the shift operation.

According to the embodiment of the present invention, the increase of the load applied to the actuator 41 for the shift operation is effectively reduced as described hereinbelow when the transmission 30 is operating at a low temperature. A frequency for performing the down-shift operation to the first shift stage is reduced when the transmission oil temperature is within a range from -20°C to 0°C, comparing the case that the transmission oil temperature is at or above 0°C. Further, the down-shift operation to the first shift stage is prohibited when the transmission oil temperature is at or below -20°C.

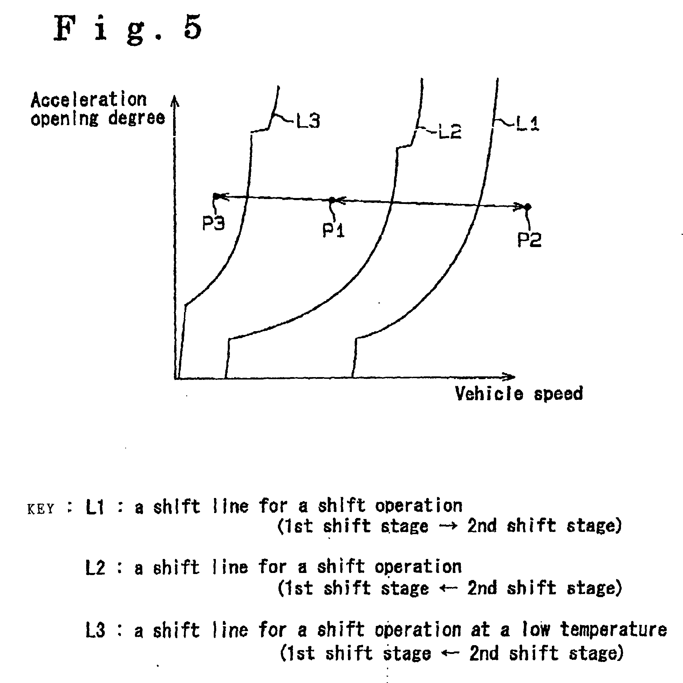

Next, an operation for restraining the increase of the load applied to the actuator 41 in the transmission 30 is described hereinbelow with reference to FIG.5.

As illustrated in FIG.5, a shift line L1 represents an up-shift line selected when performing the up-shift operation from the first shift stage to the second shift stage. Shift lines L2 and L3 represent down-shift lines selected when performing the down-shift operation from the second shift stage to the first shift stage. The shift line L2 is selected when the transmission oil temperature is at or above 0°C. The shift line L3 is selected when the transmission oil temperature is within the range from -20°C to 0°C. A horizontal axis of FIG. 5 designates a vehicle speed and a vertical axis thereof designates an acceleration opening degree.

When the shift point exceeds the shift line L1 in the state that the vehicle speed has been increased with a constant acceleration opening degree, for example when the shift point is shifted from a shift point P1 to a shift point P2 in FIG.5, the up-shift operation from the first shift stage to the second shift stage is performed. Subsequently, when the shift point returns from the shift point P2 to the shift point P1 in response to the vehicle speed deceleration, the shift line L2 is selected when the transmission oil temperature is at or above 0°C. Accordingly, the down-shift operation from the second shift stage to the first shift stage is performed. On the other hand, if the transmission oil temperature is within the range from -20°C to 0°C when the shift point returns to the point P1, the shift point has not yet exceeded the shift line L3. Therefore, the down-shift operation to the first shift stage from the second shift stage is not performed. When the shift point exceeds the shift line L3 in response to the further vehicle speed deceleration in the state that the transmission oil temperature is within the range from -20°C to 0°C, i.e. when the shift point is shifted to the shift point P3 from the shift point P1, the down-shift operation to the first shift stage from the second shift stage is performed. Further, when the transmission oil temperature is at or below -20°C, the down-shift operation to the first shift stage is prohibited and the second shift stage is maintained even if the shift point has been shifted to the shift point 3.

A memory device of the ECU 50 stores not only a shift map illustrating the shift lines L1, L2, and L3 illustrated in FIG. 5 but also some other shift maps illustrating other shift lines such as a shift line representing an up-shift operation from the second shift stage to the third shift stage, a shift line representing a down-shift operation from the third shift stage to the second shift stage, and the like. The ECU 50 performs the shift operation based upon the shift maps. However, different shift lines are selected corresponding to the transmission oil temperatures only when the down-shift operation from the second shift stage to the first shift stage is performed as illustrated in FIG. 5.

Next, a process for performing the down-shift operation from the second shift stage to the first shift stage is described hereinbelow with reference to the flow chart illustrated in FIG. 4. The process in FIG. 4 is performed every predetermined period of time by the ECU 50.

The ECU 50 first judges at step **100** whether or not the second shift stage has been selected as an actual shift stage establishing a power-transmitting path of the transmission 30. When a negative answer (NO) is obtained at step **100,** the process is terminated. When a positive answer (YES) is obtained at step **100,** the program proceeds to step **110** for judging whether or not an actual transmission oil temperature is equal to or higher than a first threshold value. The first threshold value is generally set at 0°C. When the transmission oil temperature is at or above 0°C, the program proceeds to step **120** for selecting the shift line L2 for controlling the down-shift operation from the second shift stage to the first shift stage. On the other hand, when the transmission oil temperature is lower than the first threshold value of 0°C, the program proceeds to step **130** for judging whether or not the transmission oil temperature is higher than a second threshold value. The second threshold value is generally set at -20°C. The first and second threshold values are preselected during the system design process. The second threshold value is thus a first predetermined temperature, and the first threshold value is a second predetermined temperature. When the transmission oil temperature is judged to be higher than the second threshold value of -20°C, the program proceeds to step **140** for selecting the shift line L3 for controlling the down-shift operation from the second shift stage to the first shift stage.

The program then proceeds to step **150** from steps **120** and **140,** respectively. At step **150,** the ECU 50 judges whether or not a current vehicle driving condition exceeds the shift line L2 selected at step **120** or the shift line L3 selected at step **140** based upon the vehicle speed and the acceleration opening degree. When a negative answer (NO) is obtained at step **150,** the program is terminated. On the other hand, when a positive answer (YES) is obtained at step **150,** the program proceeds to step **160** for actually performing the down-shift operation to the first shift stage.

Thus the down-shift operation from the second shift stage to the first shift stage is performed based upon the shift line L2 when the transmission oil temperature is at or above 0°C. The down-shift operation from the second shift stage to the first shift stage is performed based upon the shift line L3 when the transmission oil temperature is within the range from -20°C to 0°C. Any down-shift operation based upon the shift line L3 is performed only when the vehicle speed is less than the vehicle speed in the state where the down-shift operation is based upon the shift line L2. Therefore, when the transmission oil temperature is within the range from 0°C to -20°C, the frequency for performing the down-shift operation to the first shift stage from the second shift stage is decreased under a vehicle driving.

When the transmission oil temperature is at or below -20°C, a negative answer (NO) is obtained at step **130** and the program is terminated. That is, when the transmission oil temperature is at or below -20°C and the second shift stage is selected by the automated manual transmission 30, the down-shift operation to the first shift stage is prohibited. It should be noted that when the transmission oil temperature is at or below -20°C, the road on which the vehicle is driven tends to be slippery. In this case, it is not necessary to generate additional torque for vehicle acceleration by performing the down-shift operation from the second shift stage to the first shift stage. Thus even when the down-shift operation to the first shift stage is prohibited, no disadvantages occur with a vehicle driving.

Further, when the negative answer (NO) is obtained at step **130**, a vehicle driver can be warned through a warning lamp of that the down-shift operation to the first shift stage is prohibited. Therefore, the vehicle driver can be warned of that the down-shift operation to the first shift stage from the second shift stage has been prohibited.

The automated vehicle transmission according to the embodiment in the present invention can produce the following effects.

When the transmission oil temperature is at or below -20°C, the down-shift operation to the first shift stage, which requires a large motor torque, is prohibited. Therefore, the actuator 41 for the shift operation can be downsized comparing with a conventional automated vehicle transmission which performs the down-shift operation to the first shift stage regardless of the transmission oil temperature. This can lead to a reduction in the manufacturing cost of the automated vehicle transmission. Further, a space for mounting the actuator 41 can be saved in response to the down-sizing of the actuator 41. This can lead to a down-sizing of the automated vehicle transmission and a weight saving thereof. Further, fuel consumption can be improved in response to the weight saving of the automated vehicle transmission.

When the transmission oil temperature is within the range from -20°C to 0°C, the transition from the switch line L2 to the switch line L3 reduces the frequency for performing the down-shift operation to the first shift stage from the second shift stage in comparison with the case when the transmission oil temperature is at or above 0°C. Therefore, an increase of the load applied to the actuator 41 can be prevented by reducing the frequency for performing the down-shift operation to the first shift stage from the second shift stage. An operating life of the actuator 41 can be hence prevented from being shortened.

Generally, the down-shift operation to the first shift stage is performed via the second shift stage by the automated manual transmission 30. Therefore, according to the embodiment of the present invention, the down-shift operation to the first shift stage is prohibited only when the second shift stage has been selected. That is, when a shift stage other than the second shift stage has been selected, the processes from steps **110** through **160** illustrated in FIG. 4 are preferably not performed.

According to the embodiment of the present invention, the shift line L2 is switched to the shift line L3 when the transmission oil temperature is within the rage from -20°C to 0°C. The down-shift operation to the first shift stage is prohibited when the transmission oil temperature is at or below 20°C. However, the present invention is not limited to the above-described embodiment. The temperatures for switching the shift line or the temperature for prohibiting the down-shift operation to the first shift stage can be modified in response to a type of automated manual transmission or a type of transmission oil employed thereby.

According to the above described embodiment of the present invention, the shift line is switched by taking a two-step approach of the shift lines L2 and L3 in response to temperature decrease. Alternatively, the shift line could be switched in accordance with the invention by taking a three-step approach or more than a three-step approach in response to the temperature decrease. Still alternatively, the frequency for performing the down-shift operation to the first shift stage can be reduced when the transmission oil temperature is between the first and second predetermined temperatures by modifying the shape or position of the shift line L2 from that which is selected at a normal temperature, instead of selecting between the shift lines L2 and L3.

According to the embodiment of the present invention described with reference to Figures 1 to 5, the oil temperature sensor 48 is employed for detecting the oil temperature of the automated manual transmission 30. Alternatively, the oil temperature sensor 48 can be substituted by a water temperature sensor (i.e. an engine water temperature detecting means) for detecting a temperature of a cooling water of the engine 10. In this case, the transmission oil temperature is estimated based upon a result (i.e. an engine water temperature) detected by the water temperature sensor. The judgment at each step **110** and **130** illustrated in FIG. 4 would then be performed based upon the estimated transmission oil temperature. Therefore, the oil temperature sensor 48 for directly detecting the transmission oil temperature is not required to be employed so that the manufacturing cost of the automated vehicle transmission can be reduced.

According to the embodiment of the present invention, the down-shift operation to the first shift stage is performed via the second shift stage by the automated manual transmission 30. However, the present invention is not limited to the above-described embodiment. For instance, according to an automated manual transmission capable of performing a down-shift operation from the third shift stage to the first shift stage, the down-shift operation from the third shift stage to the first shift stage can be prohibited. When such a down-shift operation from the third shift stage to the first shift stage is prohibited, it is preferable that a down-shift operation from the third shift stage to the second shift stage is performed as a substitute for the down-shift operation from the third shift stage to the first shift stage.

In the above fully described embodiment of the present invention, the automated manual transmission 30 is a biaxial type gear transmission which is applicable for the five forward shift stages and the single rearward shift stage. Alternatively, the transmission 30 can be another transmission which is applicable for four forward shift stages and a single rearward shift stage.

The automated manual transmission 30 according to the above fully described embodiment of the present invention is provided with actuators 41, 42, and 43 for the shift operation. Alternatively, the present invention can be applicable to another automated manual transmission provided with two actuators. In this case, one of the two actuators is employed as an actuator for a select operation for selecting one of plural sleeves and the other one thereof is employed as an actuator for a shift operation for moving the sleeve selected by the actuator for the select operation in an axial direction of an output shaft of the automated manual transmission. The actuator for the shift operation can be downsized by prohibiting the down-shift operation to the first shift stage at a low temperature. Therefore, the manufacturing cost of the automated manual transmission can be reduced as well.

## Claims

1. An automated vehicle transmission comprising:
an automatic clutch assembly (20) having a clutch (21) and an actuator (23) for controlling a releasing/engaging operation of the clutch (21);
an automated manual transmission (30) for connection to an internal combustion engine (10) via the automatic clutch assembly (20) and having a synchromesh mechanism and an actuator (41, 42, 43) for effecting shift operations by moving a sleeve of the synchromesh mechanism;
a control means (50) for controlling the automatic clutch assembly (20) and the automated manual transmission (30) by driving the actuator (23) for the clutch (21) and the actuator for the shift operation; and
**characterized in that** the control means (50) prohibits a down-shift operation to the forward speed ratio first performed by driving the actuator (41, 42, 43) for the shift operation when a transmission oil temperature of the automated manual transmission is at or below a predetermined temperature.

2. An automated vehicle transmission, according to claim 1, wherein plural shift lines (L2, L3) corresponding to different transmission oil temperatures are predetermined for performing the down-shift operation to the first forward speed ratio, and above the predetermined temperature the control means (50) selects one of the plural shift lines corresponding to the transmission oil temperature and performs the down-shift operation to the first forward speed ratio based upon the selected shift line.

3. An automated vehicle transmission, according to claim 2, wherein each shift line is predetermined based upon a predetermined map with reference to an acceleration opening degree and a vehicle speed.

4. An automated vehicle transmission, according to any preceding claim, wherein the transmission oil temperature is measured or estimated using a detecting means.

5. An automated vehicle transmission, according to claim 4, wherein the detecting means is an oil temperature detecting means (48) for detecting the transmission oil temperature, or an engine water temperature detecting means for detecting an engine water temperature together with means for estimating therefrom the transmission oil temperature.

6. A method for controlling a down-shift operation to the forward speed ratio in an automated vehicle transmission having an automated manual transmission (30) with a pair of gear sets (G1 and G4, G2 and G5, G3 and Gr) for performing a speed ratio and a synchromesh mechanism for establishing a power-transmitting path via any one of the pair of gear sets, and an electronic control unit (ECU 50) for performing various controls;
**characterized in that** the electronic control unit (ECU 50) prohibits the down-shift operation to the first forward speed ratio when the transmission oil temperature is at or below a first predetermined temperature (step 130).

7. A method according to claim 6,
further **characterized in that** the electronic control unit (ECU 50):
determines whether or not an actual speed ratio of the automated manual transmission (30) is a second forward speed ratio (step 100);
determines whether or not the actual transmission oil temperature of the automated manual transmission (30) is at or above a second predetermined temperature that is higher than the first predetermined temperature when the actual speed ratio is the second forward speed ratio (step 110);
selects one of plural predetermining shift line for performing the down-shift operation to the first forward speed ratio form the second forward speed ratio when the actual transmission oil temperature is at or above the second predetermined temperature (step 120);
determines whether or not an actual vehicle driving condition has exceeded the selected shift line (step 150); and
performs the down-shift operation from the second forward speed ratio to the first forward speed ratio when the actual vehicle driving condition has exceeded the selected shift line (step 160).

8. A method according to claim 7,
further **characterized in that** the electronic control unit (ECU 50);
determines whether or not the actual transmission oil temperature is between the first predetermined temperature and the second predetermined temperature (step 130);
selects another of the plural shift lines for performing the down-shift operation to the first forward speed ration from the second forward speed ratio when the actual transmission oil temperature is between the first and second predetermined temperatures (step 140);
determines whether or not the actual vehicle driving condition has exceeded the selected shift line (step 150); and
performs the down-shift operation from the second forward speed ratio to the first forward speed ratio when the actual vehicle driving condition has exceeded the selected shift line (step 160).

## Revendications

1. Transmission automatique pour véhicule comprenant :
un ensemble (20) d'embrayage automatique comportant un embrayage (21) et un actionneur (23) destiné à commander un fonctionnement de débrayage/embrayage de l'embrayage (21) :
une transmission manuelle automatisée (30) destinée à la connexion avec un moteur à combustion interne (10) par l'intermédiaire de l'ensemble (20) d'embrayage automatique et un comportant un mécanisme de synchroniseur et un actionneur (41, 42, 43) destinés à exécuter les changements de rapport par décalage d'un manchon d'accouplement du mécanisme de synchroniseur ;
un moyen de commande (50) destiné à commander l'ensemble (20) d'embrayage automatique et la transmission manuelle automatisée (30) par actionnement de l'actionneur (23) de l'embrayage (21) et l'actionneur de changement de rapport ; et
**caractérisé en ce que** le moyen de commande (50) interdit une opération de rétrogradation en première vitesse avant exécutée par actionnement de l'actionneur (41, 42, 43) de changement de rapport quand une température de l'huile de la transmission de la transmission manuelle automatisée est égale ou inférieure à une température prédéterminée.

2. Transmission automatique pour véhicule selon la revendication 1, dans laquelle plusieurs mécanismes de changement de rapport (L2, L3) correspondant à des températures différentes de l'huile de la transmission sont prédéterminées pour exécuter l'opération de rétrogradation en première vitesse avant et dans laquelle au-dessus de la température prédéterminée, le moyen de commande (50) sélectionne l'un des plusieurs mécanismes de changement de rapport correspondant à la température de l'huile de la transmission et exécute l'opération de rétrogradation en première vitesse avant en se basant sur le mécanisme de changement de rapport sélectionnée.

3. Transmission automatique pour véhicule selon la revendication 2, dans laquelle chaque mécanisme de changement de rapport est prédéterminé en se basant sur un diagramme prédéterminé faisant référence à un degré d'ouverture de l'accélération et à une vitesse du véhicule.

4. Transmission automatique pour véhicule selon l'une quelconque des revendications précédentes, dans laquelle la température de l'huile de la transmission est mesurée ou estimée à l'aide d'un moyen de détection.

5. Transmission automatique pour véhicule selon la revendication 4, dans laquelle le moyen de détection est un moyen de détection (48) de la température de l'huile destiné à déterminer la température de l'huile de la transmission ou un moyen de détection de la température de l'eau du moteur destiné à déterminer la température de l'eau du moteur en association avec un moyen d'estimation à partir de celle-ci de la température de l'huile de la transmission.

6. Procédé de commande d'une opération de rétrogradation en première vitesse avant dans une transmission automatique de véhicule comportant une transmission manuelle automatisée (30) munie d'une paire de jeux d'engrenages (G1 et G4, G2 et G5, G3 et Gr) destinée à mettre en oeuvre un rapport avant et d'un mécanisme de synchroniseur destiné à établir une voie de transmission d'énergie par l'intermédiaire de l'une quelconque des paires de jeux d'engrenages, et une unité de commande électronique (ECU 50) destinée à exécuter diverses commandes ;
**caractérisé en ce que** l'unité de commande électronique (ECU 50) interdit l'opération de rétrogradation en première vitesse avant quand la température de l'huile de la transmission de la transmission manuelle automatisée est égale ou inférieure à une première température prédéterminée (étape 130).

7. Procédé selon la revendication 6,
**caractérisé en outre en ce que** l'unité électronique de commande (ECU 50) :
détermine si un rapport réel de la transmission manuelle automatisée (30) est ou non la deuxième vitesse avant (étape 100) ;
détermine si la température réelle de l'huile de la transmission de la transmission manuelle automatisée (30) est ou non égale ou supérieure à une deuxième température prédéterminée qui est supérieure à la première température prédéterminée quand le rapport réel est la deuxième vitesse avant (étape 110) ;
sélectionne l'un des plusieurs mécanismes de changement de rapport pour exécuter l'opération de rétrogradation de deuxième vitesse avant en première vitesse avant quand la température réelle de l'huile de la transmission est égale ou supérieure à la deuxième température prédéterminée (étape 120) ;
détermine si une condition réelle de conduite du véhicule a ou non dépassé celle du mécanisme de changement de rapport sélectionné (étape 150) ; et
exécute l'opération de rétrogradation de deuxième vitesse avant en première vitesse avant quand la condition réelle de conduite du véhicule a dépassé celle du mécanisme de changement de rapport sélectionné (étape 160).

8. Procédé selon la revendication 7,
**caractérisé en outre en ce que** l'unité électronique de commande (ECU 50) :
détermine si la température réelle de l'huile de la transmission de la transmission manuelle automatisée (30) est ou non comprise entre la première température prédéterminée et la deuxième température prédéterminée (étape 130) ;
sélectionne une autre des plusieurs tringleries de changement de rapport pour exécuter l'opération de rétrogradation de deuxième vitesse avant en première vitesse avant quand la température réelle de l'huile de la transmission de la transmission manuelle automatisée comprise entre la première température prédéterminée et la deuxième température prédéterminée (étape 140) ;
détermine si la condition réelle de conduite du véhicule a ou non dépassé celle de la tringlerie de changement de rapport sélectionnée (étape 150) ; et
exécute l'opération de rétrogradation de deuxième vitesse avant en première vitesse avant quand la condition réelle de conduite du véhicule a dépassé celle de la tringlerie de changement de rapport sélectionnée (étape 160).

## Patentansprüche

1. Automatisiertes Fahrzeuggetriebe, enthaltend:
eine Automatikkupplungsanordnung (20), die eine Kupplung (21) und ein Stellglied (23) zum Steuern eines Freigabe/Eingriffsvorgangs der Kupplung (21) enthält;
ein automatisiertes Handschaltgetriebe (30) zur Verbindung mit einem Verbrennungsmotor (10) über die Automatikkupplungsanordnung (20), das einen Synchromeshmechanismus und ein Stellglied (41, 42, 43) zum Bewirken von Schaltvorgängen durch Bewegen einer Hülse des Synchromeshmechanismus aufweist;
ein Steuermittel (50) zum Steuern der Automatikkupplungsanordnung (20) und des automatisierten Handschaltgetriebes (30) durch Betreiben des Stellglieds (23) für die Kupplung (21) und des Stellglieds für den Schaltvorgang; und
**dadurch gekennzeichnet, dass** das Steuermittel (50) einen Herunterschaltvorgang in das erste Vorwärtsgeschwindigkeitsverhältnis, der durch das Betreiben des Stellglieds (41, 42, 43) für den Schaltvorgang durchgeführt wird, verhindert, wenn eine Getriebeöltemperatur des automatisierten Handschaltgetriebes auf oder unter einer vorgegebenen Temperatur liegt.

2. Automatisiertes Fahrzeuggetriebe nach Anspruch 1, wobei eine Mehrzahl von Schaltlinien (L2, L3), die unterschiedlichen Getriebeöltemperaturen entsprechen, zum Durchführen des Herunterschaltvorgangs in das erste Vorwärtsgeschwindigkeitsverhältnis vorbestimmt sind, und über der vorgegebenen Temperatur das Steuermittel (50) eine der Mehrzahl von Schaltlinien entsprechend der Getriebeöltemperatur wählt und den Herunterschaltvorgang in das erste Vorwärtsgeschwindigkeitsverhältnis basierend auf der gewählten Schaltlinie durchführt.

3. Automatisiertes Fahrzeuggetriebe nach Anspruch 2, wobei jede Schaltlinie basierend auf einer vorgegebenen Karte unter Bezugnahme auf einen Beschleunigeröffnungsgrad und eine Fahrzeuggeschwindigkeit vorbestimmt ist.

4. Automatisiertes Fahrzeuggetriebe nach einem der vorhergehenden Ansprüche, wobei die Getriebeöltemperatur unter Verwendung eines Erfassungsmittels gemessen oder geschätzt wird.

5. Automatisiertes Fahrzeuggetriebe nach Anspruch 4, wobei das Erfassungsmittel ein Erfassungsmittel (48) für die Öltemperatur zum Erfassen der Getriebeöltemperatur oder ein Motorwassertemperaturerfassungsmittel zum Erfassen einer Wassertemperatur des Motors zusammen mit einem Mittel zum Abschätzen der Getriebeöltemperatur daraus ist.

6. Verfahren zum Steuern eines Herunterschaltvorgangs in das erste Vorwärtsgeschwindigkeitsverhältnis in einem automatisierten Fahrzeuggetriebe, das ein automatisiertes Handschaltgetriebe (30) mit einem Paar von Zahnradsätzen (G1 und G4, G2 und G5, G3 und Gr) zum Durchführen eines Geschwindigkeitsverhältnisses aufweist, und einen Synchromeshmechanismus zum Herstellen eines leistungsübertragenden Wegs über eines der Paare der Zahnradsätze, und eine elektronische Steuereinheit (ECU 50) zum Durchführen verschiedener Steuerungen;
**dadurch gekennzeichnet, dass** die elektronische Steuereinheit (ECU 50) den Herunterschaltvorgang in das erste Vorwärtsgeschwindigkeitsverhältnis verhindert, wenn die Getriebeöltemperatur auf oder unter einer ersten vorgegebenen Temperatur ist (Schritt 130).

7. Verfahren nach Anspruch 6,
weiter **dadurch gekennzeichnet, dass** die elektronische Steuereinheit (ECU 50):
bestimmt, ob ein augenblickliches Geschwindigkeitsverhältnis des automatisierten Handschaltgetriebes (30) ein zweites Vorwärtsgeschwindigkeitsverhältnis ist oder nicht (Schritt 100);
bestimmt, ob die augenblickliche Getriebeöltemperatur des automatisierten Handschaltgetriebes (30) auf oder über einer zweiten vorgegebenen Temperatur ist, die höher als die erste vorgegebene Temperatur ist, oder nicht, wenn das augenblickliche Geschwindigkeitsverhältnis das zweite Vorwärtsgeschwindigkeitsverhältnis ist (Schritt 110);
eine einer Mehrzahl von vorbestimmten Schaltlinien zum Durchführen des Herunterschaltvorgangs in das erste Vorwärtsgeschwindigkeitsverhältnis aus dem zweiten Vorwärtsgeschwindigkeitsverhältnis auswählt, wenn die augenblickliche Getriebeöltemperatur auf oder über der zweiten vorgegebenen Temperatur ist (Schritt 120);
bestimmt, ob ein augenblicklicher Fahrzeugfahrzustand aus der gewählten Schaltlinie herausgefallen ist oder nicht (Schritt 150); und
den Herunterschaltvorgang aus dem zweiten Vorwärtsgeschwindigkeitsverhältnis in das erste Vorwärtsgeschwindigkeitsverhältnis durchführt, wenn der augenblickliche Fahrzeugfahrzustand aus der gewählten Schaltlinie herausgefallen ist (Schritt 160).

8. Verfahren nach Anspruch 7,
weiter **dadurch gekennzeichnet, dass** die elektronische Steuereinheit (ECU 50):
bestimmt, ob die augenblickliche Getriebeöltemperatur zwischen der ersten vorbestimmten Temperatur und der zweiten vorbestimmten Temperatur ist oder nicht (Schritt 130);
eine andere der Mehrzahl von Schaltlinien zum Ausführen des Herunterschaltvorgangs in das erste Vorwärtsgeschwindigkeitsverhältnis von dem zweiten Vorwärtsgeschwindigkeitsverhältnis wählt, wenn die augenblickliche Getriebeöltemperatur zwischen der ersten und der zweiten vorgegebenen Temperatur ist (Schritt 140);
bestimmt, ob der augenblickliche Fahrzeugfahrzustand aus der gewählten Schaltlinie herausgefallen ist oder nicht (Schritt 150); und
den Herunterschaltvorgang von dem zweiten Vorwärtsgeschwindigkeitsverhältnis in das erste Vorwärtsgeschwindigkeitsverhältnis ausführt, wenn der augenblickliche Fahrzeugfahrstand aus der gewählten Schaltlinie herausgefallen ist (Schritt 160).
